# EUROPEAN PATENT APPLICATION

(11) **EP 1 202 164 A2**
(43) Date of publication of application: **02.05.2002**
(21) Application number: 01124696.4
(22) Date of filing: 16.10.2001
(51) Int. Cl.: G06F 7/22, G06F 17/30

(54) **Systems and methods for representing variable-length digit strings and for providing high-performance search operations**

(30) Priority: 16.10.2000 US 240071 P; 30.04.2001 US 287013 P; 26.06.2001 US 888433
(71) Applicant: Raviant Networks, Leawood, KS 66211 (US)
(72) Inventor: Salge, Jason M., Olathe, Kansas 66062 (US)
(74) Representative: Tönhardt, Marion, Dr.

(57) **Abstract**

Systems and methods providing high performance data manipulation and searching using a novel data structure for storing data values. The data structure includes a length value in combination with a digit-string data value. The combined length and data value can be stored in a data structure that may be sorted according to standard sorting techniques. When a set of data structures is sorted, the resulting order of the data values can be employed to increase performance of the data engine. In one embodiment, the length value is stored in the end portion of the data structure and in another embodiment, the length portion is stored in the beginning portion of the data structure. Range-based searches and ambiguity checking operations are also presented herein.

## Description

This application claims the benefit of U.S. Provisional Application Number 60/240,071 filed October 16, 2000, U.S. Provisional Application Number 60/287,013 filed April 30, 2001, and U.S. Patent Application Number 09/888,433 filed June 26, 2001, all of which are herein incorporated by reference in their entirety.

### BACKGROUND

### Field of the Invention

The present invention relates generally to construction and execution of computing engines for processing and storing variable-length digit string data and matching presented values against ranges of values.

### Background of the Invention

In conventional data processing systems, a number of different schemes have been used for indexing tables of digit strings. The simplest of these schemes uses a single fixed-length prefix. In a fixed-length prefix system, the first *n* digits of a presented digit string are used to search the table where *n* is a property of the table. For example, a table that matches numbers against North-American Numbering Plan Areas (NPAs or area codes) might be indexed using a 3-digit, fixed-size, key. At run-time, the first three digits of the presented digit string would be used to search the table for a matching row.

However, such fixed-length tables are not practical in many cases for routing based on variable length digit strings, such as telephone numbers. In some cases, there is a need to differentiate specific numbers (*e.g*., subscriber numbers associated with the switch performing the lookup) while in others one has to match blocks of consecutive numbers (e.g. numbers associated with other switches). One conventional attempt to solve this problem has been to employ multiple fixed-length prefix tables. As the name implies, use of multiple fixed-length prefix tables means the data is stored in more than one table. Each table has a different fixed-length key to allow application of different search criteria. For example, North American telephone numbers might be appropriately matched against tables of length ten digits, six digits, and three digits. The first ten digits of the presented number (the "subscriber number") may be used to search the 10-digit table. If a match is found in this table, the result may be returned. If no match is found, the first six digits of the presented number (the "exchange") may be used to search the 6-digit table. Again, if a match is found, the result may be returned. Finally, if no match was found in the other tables, the first three digits of the presented number (the "NPA") would be used to search the 3-digit table.

Although the above scheme may be extended to use more tables to provide additional string matching criteria, such an approach would not be practical. Such a scheme would require multiple searches, starting with the table having the largest prefix and ending with table having the shortest prefix, until a match is found.

Common search strategies, not only in the telephony industry but also in database applications in general, involve exact-matching between the value presented for lookup (the "presented key") and values provisioned in the table being searched. Alternatively, some search strategies involve matching only a sub-string of the presented value against the values provisioned in the table. Again, the sub-string may be matched exactly. When the sub-string is taken from the leading digits or characters of the presented value, this scheme may be referred to as prefix matching because matching is defined by the provisioned key value being a prefix of the presented value. An example of a prefix match is that "913" is a prefix of "913484". For contrast, neither is "913484" a prefix of "913" nor is "913" a prefix of any of "91", "92", or "912484".

Although prefix matching can be useful, it can also result in extra provisioning. For example, to specify that a particular action should occur for any telephone number staring with "913641", "913642", "913643", or "913644" (but not other numbers starting with "91364"), one must provision four different rows, one for each of the prefixes to be matched. It would be simpler if one could instead specify that a row covered a range, such as "913641" through "913644".

In fact, some prefix-based systems include a user interface that allows the user to specify a range of numbers and have the appropriate multiple rows be automatically provisioned. Nevertheless, this is a convenience for the user and does not affect the run-time representation: it still requires multiple similar rows.

Some systems that deal with varying-length data have used a varying length representation, such as character strings. A problem with such systems is that performing operations on such representations, such as comparing or copying, may involve run-time execution loops that process one character at a time. Far more efficient would be a representation that allows parallel processing of the digits in a single operation (or, at least, a small fixed number of operations).

If digit strings are converted to corresponding integer representations or are padded with some padding digit to a maximal length, then such parallel processing becomes possible. Unless special digit values are reserved for padding, however, such representations can lose track of what is padding and what is not. A common side-effect is not being able to distinguish either leading or trailing "0" digits. For example, "123" and "0123" might both be represented identically as the integer 123. Alternatively, both "123" and "1230" might both be represented identically as "1230000".

Another representation is designed specifically for searching: M-ary trees where each node has up to *M* possible successor nodes where *M* is the number of distinct digit values allowed (or sometimes that number + 1). Also known as tries, digit trees are searched by traversing one node for each digit of the digit string presented; at each level the successor node is selected according to the corresponding digit of the digit string. In a given table, digit strings that share a common prefix will also share initial digit-tree nodes; they will diverge when the first distinct digit is reached. Because the search-indexing method and the representation are so closely bound with each other, digit trees do not work particularly well for range-based matching. They can be time-efficient, however, for implementing prefix matching: the search time is proportional to the length of the digit string presented and is independent of the size of the table. Unless a table is densely populated, however, digit trees tend to be space-inefficient. The implementation can also be confusing and difficult for the end-user to provision.

### SUMMARY OF THE INVENTION

Embodiments of the present invention comprise systems and methods for implementing a high performance data engine and data representation methods for optimizing data table operations. The data engine comprises a computer system including a central processing unit, a memory and programming logic and a data table comprising a plurality of data structures for storing data values. The data structures are made up of a first portion and a second portion, where the first portion stores a data value and the second portion stores a length value associated with the data value.

In one embodiment of the present invention, the first portion (i.e., the data value) is located in the beginning of the data structure and the second portion (i.e., the length) is located in the end of the data structure. When the data table in this embodiment is sorted, if a first data value comprising N digits and a second data value comprising at least N+1 digits comprise an identical string of digits for the first N digits, then the first data value precedes the second data value in the sorted data table. In this first embodiment, if a third data value having M digits and a fourth data value having at least M digits, comprise an identical string of digits only for the first Q digits where Q < M, then the ordering of the third and fourth data values is determined by the ordering of the (Q+1)^{st} digit from the third data value and the (Q+1)^{st} digit from the fourth data value.

In another embodiment of the present invention, the first portion (i.e., the data value) is located in the end of the data structure and the second portion (i.e., the length) is located in the beginning of the data structure. When the data table in this embodiment is sorted, if a first data value comprises N digits and if a second data value comprising at least N+1 digits then the first data value precedes the second data value in the sorted data table. In this embodiment, if a third data value and a fourth data values both comprise M digits, and if the third data value and the fourth data value comprise an identical string of digits only for the first Q digits where Q < M, then the ordering of the third and fourth data values is determined by the ordering of the (Q+1)^{st} digit from the third data value and the (Q+1)^{st} digit from the fourth data value.

Embodiments of the present invention include systems and methods for high performance data engines using range-based searching techniques made possible by the data structures presented herein. Other embodiments of the present invention include new methods for ambiguity checking in a presented data string thereby ensuring data processing operations are efficient and fast.

### BRIEF DESCRIPTION OF THE DRAWINGS

Figure 1 is a schematic diagram showing a seven digit maximum digit string represented according to a first embodiment of the present invention.

Figure 2 is a schematic diagram showing a three digit maximum digit string represented according to a first embodiment of the present invention.

Figure 3 is a schematic diagram showing a twenty-eight digit maximum digit string represented according to a first embodiment of the present invention.

Figure 4 is a schematic diagram showing a twenty-eight digit maximum digit string represented according to another implementation of a first embodiment of the present invention.

Figure 5 is a schematic diagram showing a seven digit maximum digit string represented according to a second embodiment of the present invention.

Figure 6A is a table showing an ordered sequence resulting from sorting a set of digit strings represented according to a first embodiment of the present invention.

Figure 6B is a table showing an ordered sequence resulting from sorting a set of digit strings represented according to a second embodiment of the present invention.

Figure 7 is a table showing the external representation of the Range Start and Range End values of four rows used as an example, below.

Figure 8 is a schematic diagram showing how rows in a table implemented according to an embodiment of the present invention may be split into multiple rows.

Figures 9A through 9B comprise a table showing a sorted enumeration of the valid values according to a first embodiment of the present invention that allows between zero and two digits, each digit in the range "0" through "F". For each digit string value, the digit string's length and its representation as an integer (in hexadecimal notation) are also listed.

Figures 10A through 10B comprise a table showing a sorted enumeration of the valid values according to a second embodiment of the present invention that allows between zero and two digits, each digit in the range "0" through "F". For each digit string value, the digit string's length and its representation as an integer (in hexadecimal notation) are also listed.

Figures 11A through 11H comprise a table showing a sorted enumeration of the valid values according to a first embodiment of the present invention that allows between zero and three digits, each digit in the range "0" through "9". For each digit string value, the digit string's length and its representation as an integer (in hexadecimal notation) are also listed.

Figures 12A through 12H comprise a table showing a sorted enumeration of the valid values according to a second embodiment of the present invention that allows between zero and three digits, each digit in the range "0" through "9". For each digit string value, the digit string's length and its representation as an integer (in hexadecimal notation) are also listed.

### DETAILED DESCRIPTION OF THE INVENTION

Embodiments of the present invention provide systems and methods for construction and execution of computing engines for processing and storing variable-length digit string data and matching presented values against designated ranges of values, while providing: (1) efficient storage of digit strings, (2) rapid editing of digit strings, and (3) rapid searching of tables indexed by such digit strings. Embodiments of the present invention provide systems and methods for efficient representation of digit strings, such as for example, telephone numbers. Efficient representation can both reduce memory usage and speed processing for associated computing engines. Using the example of telephone numbers, embodiments of the present invention may satisfy one or more of the following requirements:
1. Digit strings, consisting of strings of standard digits ("0", "1", "2", "3", "4", "5", "6", "7", "8", and "9") and also "overdecadic" (*i.e*., hexadecimal) digits ("A", "B", "C", "D", "E", and "F"), should be compactly represented.
2. The length of a digit string is significant. All digits, including any leading or trailing zeroes ("0"), are significant and should be neither discarded nor added.
3. Empty (zero-length) digit strings must be representable.
4. Depending on context, such as telephony, typical maximum lengths for digit strings may be, for example, four digits (*e.g*., carrier codes), fifteen digits *(e.g.,* international telephone numbers), and twenty-eight digits (*e.g*., international telephone numbers with both routing number and dialed number combined in a single field). A family of representations should handle each of these, and other variations, efficiently.
5. Comparison of digit strings should, in the mathematical sense, define a total ordering. That is, for all digit strings, X, Y, and Z:
   a. exactly one of the relations X = Y, X < Y, or Y < X holds;
   b. if X = Y, then X and Y are identical digit strings; and
   c. if X < Y and Y < Z, then X < Z.
6. The ordering of digit strings should be "useful" for the applications in which they are used.
7. To make searches efficient, particular attention should be paid to making comparison of digit strings fast.
8. Other operations, such as digit manipulation (inserting and/or deleting digits, concatenating digit strings, and the like) should also be efficient.
9. Conversion to and from ASCII (*e.g*., for data-entry and printing or for use with protocols such as integrated services digital network (ISDN) signaling protocols) and binary coded decimal (BCD) (*e.g*., for use with Common Channel Signaling System Number 7 (SS7) ISDN User Part (ISUP) protocols), or other representations, should also be efficient.

Of the last three requirements, efficiency of comparisons is typically the most important requirement for telephony applications, and may be as important for other data processing systems. For example, searching a table containing one million rows, indexed by telephone number, typically requires at least twenty (20) comparisons per lookup and so the total execution time of comparisons can become significant. Accordingly, in some embodiments of the present invention, the other operations need not be quite as optimized as comparison operations. In other embodiments, one or more of the above requirements may take precedence over one or more of these or other requirements.

In addition to efficient representation of digit strings, such as for example, telephone numbers, the present invention also provides efficient range-based searching capabilities as described in more detail in subsequent sections below.

### I. First Exemplary Embodiment

In a first exemplary embodiment, the present invention provides systems and methods for representing digit strings in a format having an underlying representation of fixed-width, unsigned, binary integers wherein a length parameter is included in the least significant portion of the data string. Digit strings represented according to this embodiment may be of arbitrary size. That is, for example, an embodiment may be used to represent a set of digit strings, up to seven digits in length, using a 32-bit integer string. In another example, an embodiment may be used for representing 0-3 digit strings in 16-bit integers, 0-15 digit strings in 64-bit integers, 0-18 digit strings in 80-bit integers, 0-22 digit strings in 96-bit integers, 0-30 digit strings in 128-bit integers, and so on, for any other size that may fit a particular application. On computers that do not provide native operations for operating on integers of size greater than w, where w is the word size, the standard techniques for implementing multi-word integers may be applied for digit strings larger than w bits.

The above examples describe digit strings represented according to an embodiment of the present invention using four bits per digit, thereby allowing only the digits "0" through "F" to be included in the representation. While such 4-bit coding is sufficient for current telephony applications, the present invention encompasses digit string representations having alternative bit-length coding. That is, for example, a particular application may only require digit strings comprising only the digits "0" through "7". In that case, three bits per digit would be sufficient. The present invention may also be used to represent more than sixteen possible values for each digit, in which case more than four bits per digit would be required for the representation.

The present invention may be generalized to digit strings other than telephone numbers. For example, within the area of telephony signaling, a carrier identification code (CIC) or a jurisdiction information parameter (JIP) may be represented as described herein. An example outside the area of telephony signaling is U.S. Postal ZIP codes, which can be five or nine digits in length and which have hierarchical significance for the leading digits. Another example might be a manufacturer's part numbers.

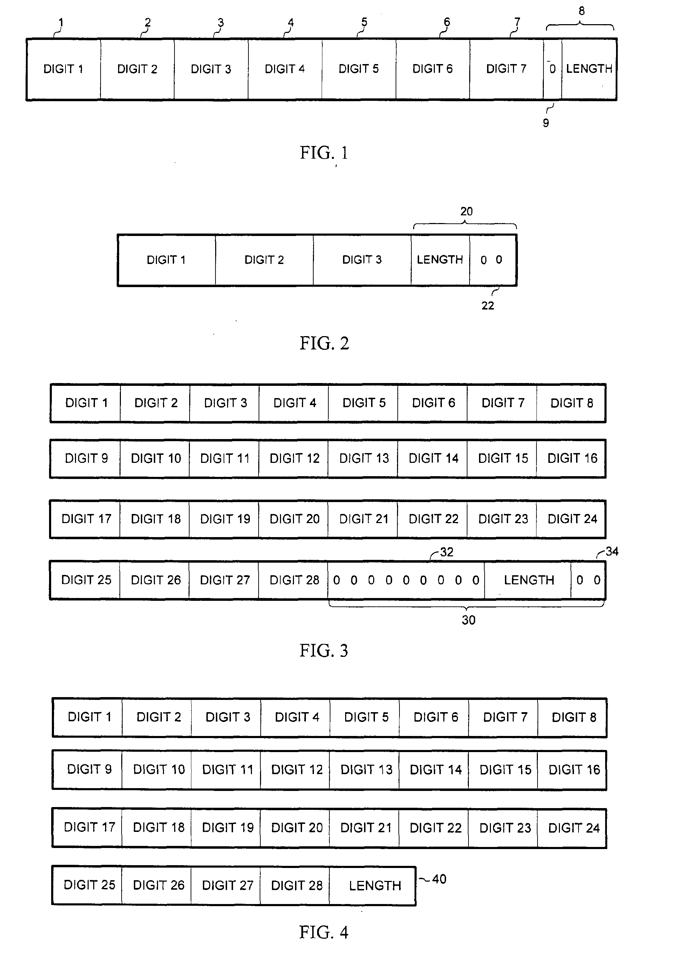

Figure 1 shows an example of a 7-digit (maximum) string represented according to this embodiment. In this example, the digit string may be represented as a 32-bit, unsigned, integer, where the digits of the string are represented as 4-bit fields (digit fields 1-7 plus length field 8 in Figure 1). The number is "left-justified" according to the following rules:
1. Length field 8 contains the length of the digit string, which in this example may be a value between zero and seven.
2. Digit fields 1 through *l*, where *l* is the value stored in length field 8, contains one of the values "0" through "0xF" (*i.e*., hexadecimal "F").
3. Digit field *l*+1 through digit field 7, contains the value "0".
4. Pad field 9, which, in this example, is part of length field 8, serves to fill out a complete four bits in length field 8 and contains the value "0".

The presence and position of pad fields in digit strings represented according to this embodiment are arbitrary. That is, they are illustrated here for the purpose of bringing data into alignment with typical computer word sizes. Although Figure 1 shows pad field 9 having only one bit, comprising the first bit of length field 8, that extra bit could also be placed at any of several other positions within the representation without material change to the invention. Pad field 9 may even be omitted if the digit strings in this example were stored in thirty-one (31) bits instead of thirty-two (32) bits.

The position and size of pad fields (if present) may be chosen for convenience of implementation. For example, if the digit fields are each four bits wide, then placing exactly two pad bits immediately following the length field might reduce the number of shift operations needed in implementing some operations.

Other examples of digit strings represented according to this embodiment are shown in Figures 2 and 3. Figure 2 shows a 3-digit (maximum) string stored in a 16-bit word (with pad field 22 comprising two pad bits, placed at the end of length field 20). Figure 3 shows a 28-digit (maximum) string stored in four 32-bit words comprising a 128-bit string. In Figure 3, length field 30 comprises sixteen bits. But, since only five bits are needed to define any possible length for a digit string stored in this example, the remaining eleven bits are used to fill a complete 32-bit word for the string. In this example, the eleven pad bits are stored in different two pad fields: pad field 32 at the beginning of length field 30 and pad field 34 at the end of length field 30.

As noted above, some embodiments may include no pad bits. For example, the digit string in Figure 3 could be stored in a structure such as that shown in Figure 4 without loosing any of the advantages afforded by the present invention. As shown in Figure 4, length field 40 is five bits in length, and the complete digit string comprises a 117-bit string.

Figure 3 also illustrates that digit strings represented according to this embodiment may cross word boundaries (if, for example, the implementation is based upon an underlying 32-bit word-size). On a computer supporting 64-bit words, only two words would be needed; on a computer supporting 128-bit words, only one word would be required. Moreover, for representations that require multiple computer words, the ordering of those words in memory is not critical and may be chosen to be suitable for efficiency or convenience of implementation.

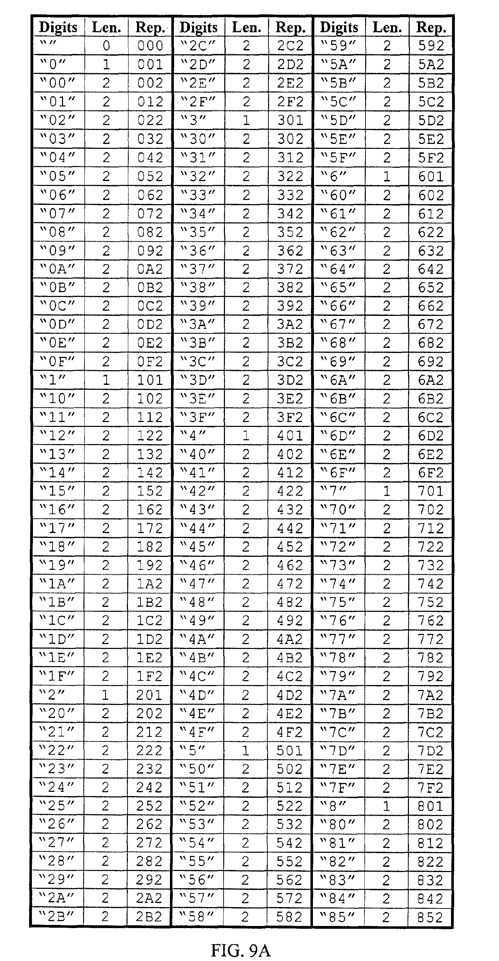

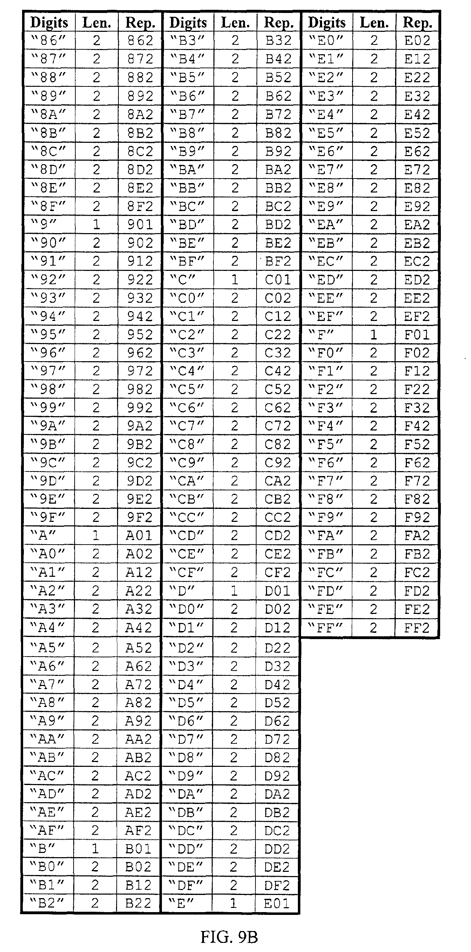

Figures 9A through 9B enumerate, in ascending order, all possible values of a 2-digit (maximum) string stored in a 16-bit word with the length field right-justified in the last four bits. Each digit may be in the range "0" through "F". (No "special values" are shown in the list.)

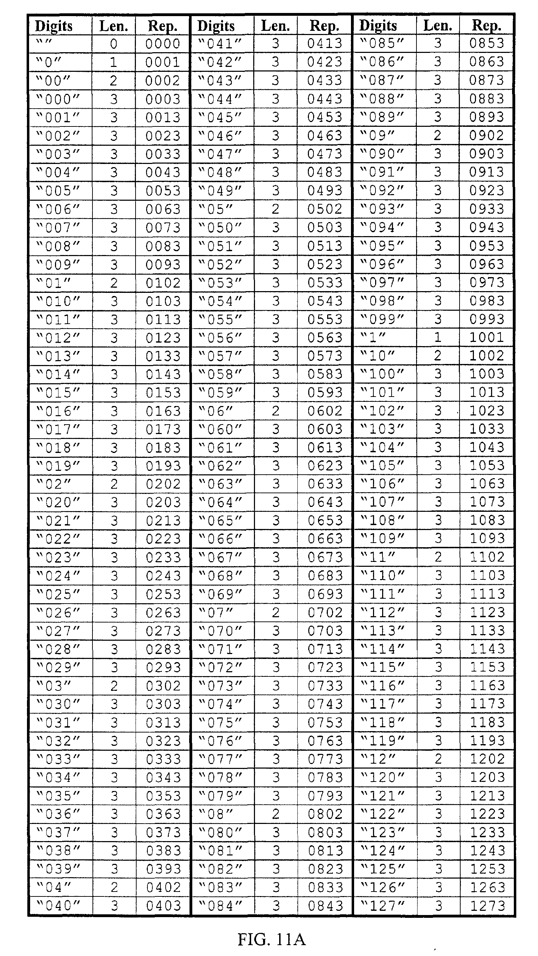

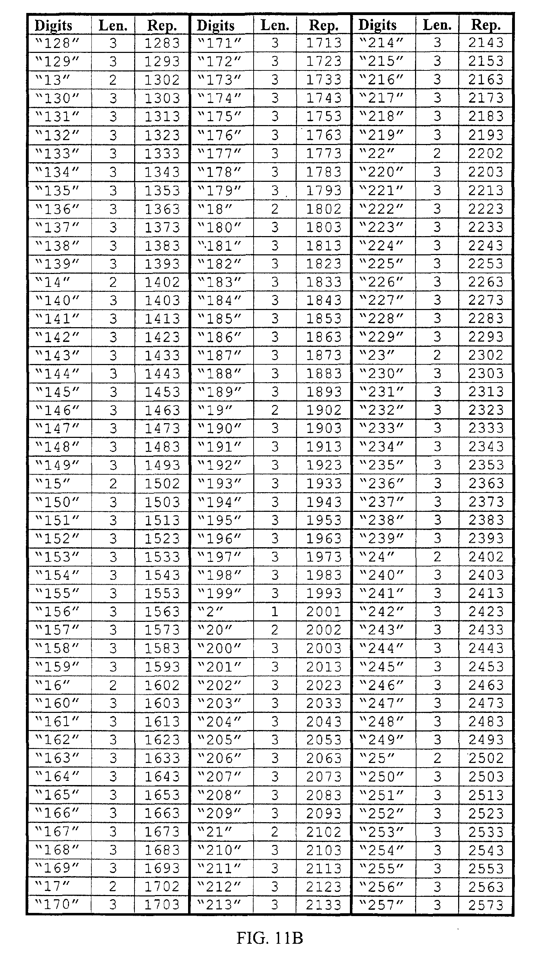

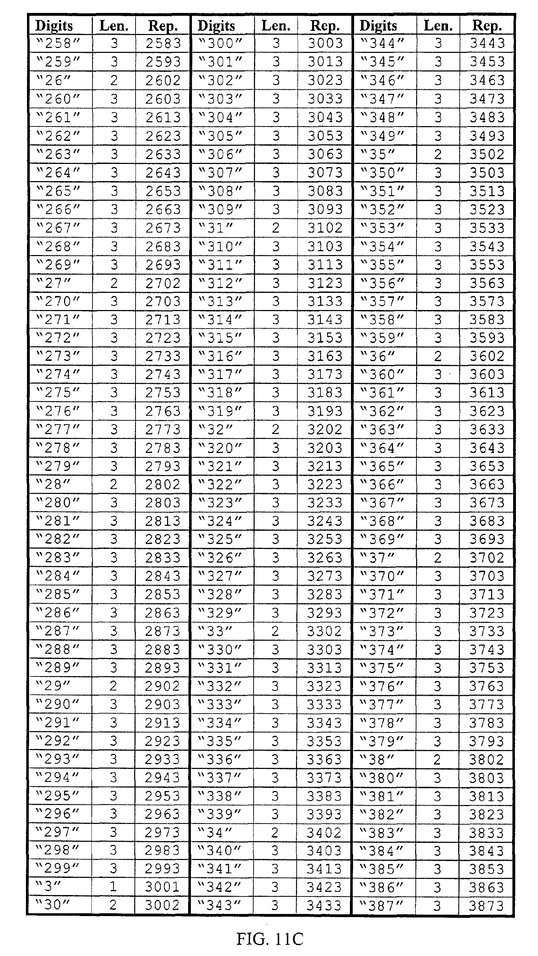

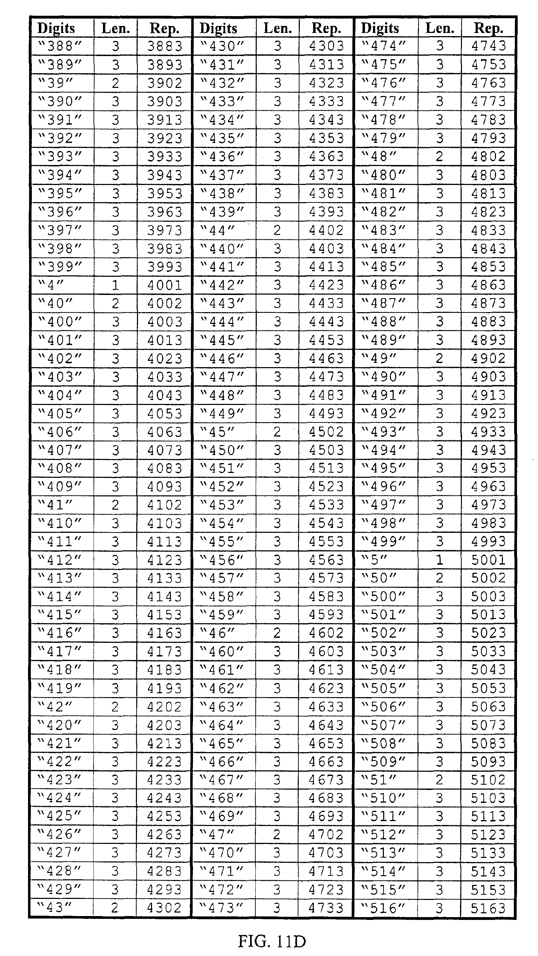

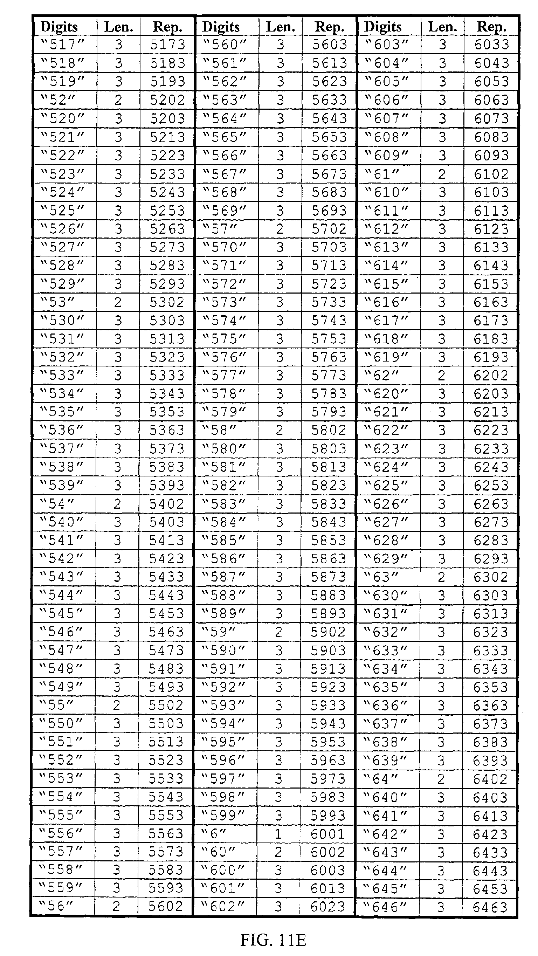

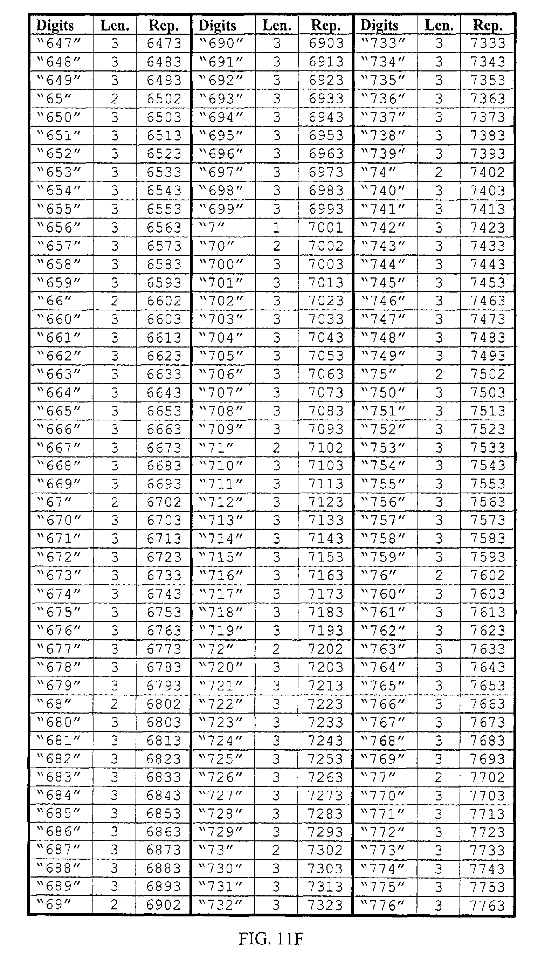

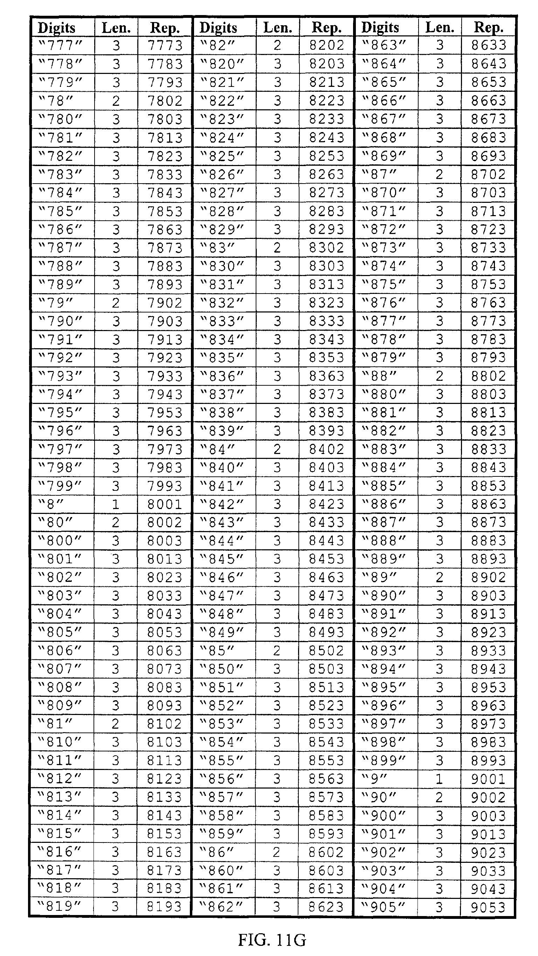

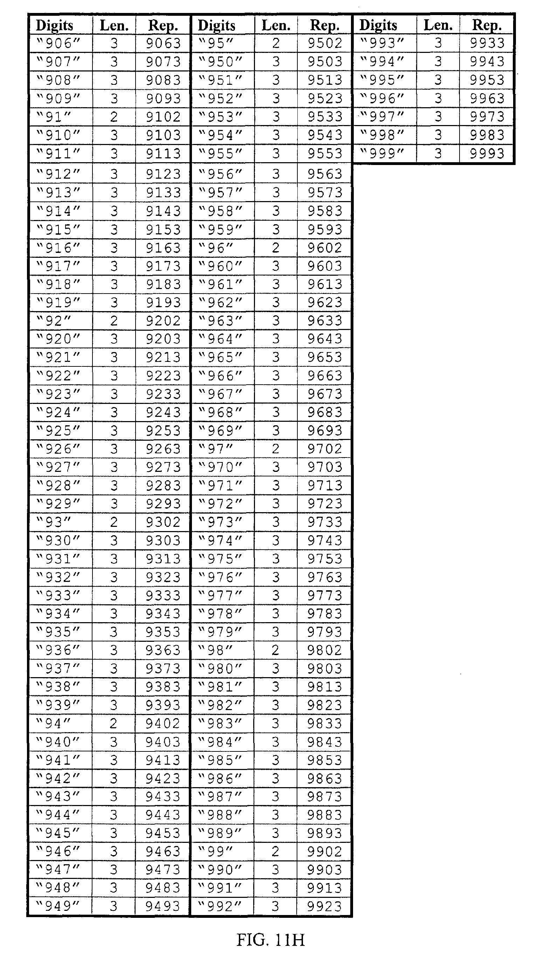

Figures 11A through 11H enumerate, in ascending order, all possible values of a 3-digit (maximum) digit string stored in a 16-bit word with the length field right-justified in the last four bits. Each digit may be in the range "0" through "9". (Again, no "special values" are shown in the list.)

### a. Handling of Special Values

In many database and other applications, in addition to the storing actual data values there may be a need to store one or more special values to indicate special circumstances. For example, to represent the fact that a telephone number is not present or such, the application may need to represent a null value which is different from any legitimate telephone number or data value for the application. For telephony applications, comparison between telephone numbers and null values in order to determine equality or inequality may also be supported, whereas comparison in order to determine ordering (*i.e*., the < comparison) need not be supported. This embodiment may accommodate such special values. For example, in a representation having a length field containing zero, a non-zero value in any of the digit fields (which would otherwise be invalid) may be used to indicate to an application that this is a special value that may require non-standard handling. The specific values placed in those fields may be used to distinguish distinct special values.

### b. Operations on Digit Strings

Copying the value of a digit string represented according to this embodiment to a variable represented as digit string of the same representation size is implemented as direct copying of the underlying integers. That is, assignment (in the programming language sense of that word) is implemented by direct copying of the underlying representation.

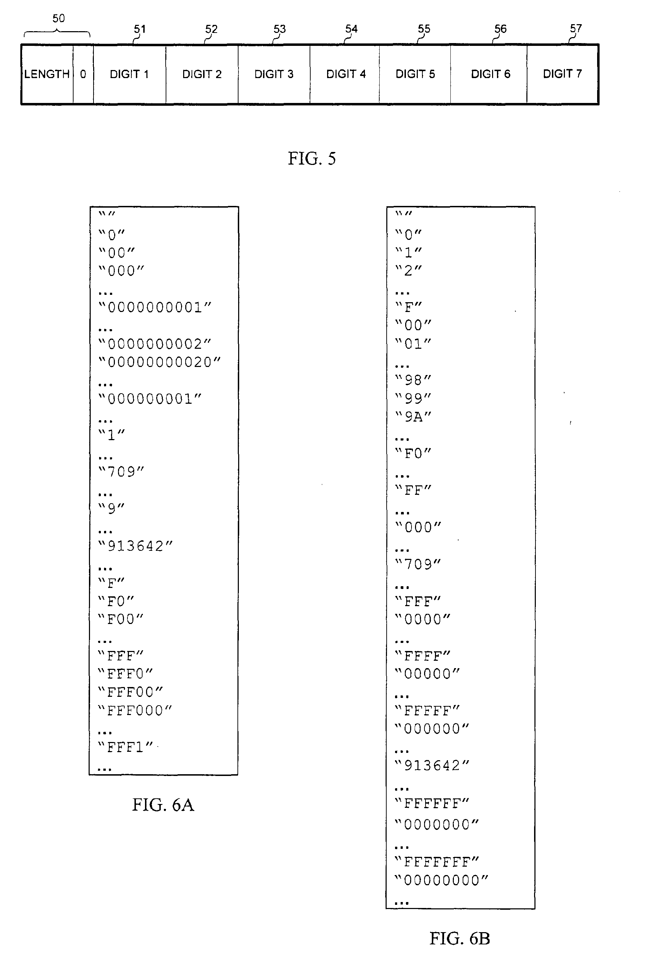

Figure 5 shows an example of a 7-digit (maximum) string represented according to this second embodiment. In this example, the digit string may be represented as a 32-bit, unsigned, integer, where the digits of the string are represented as 4-bit fields in a manner similar to the first embodiment, as depicted in Figure 1. In the second embodiment, however, pad field 50 precedes (at the most-significant end of the integer) the digit fields 51 through 57 instead of following (at the least-significant end of the integer) those digit fields.

Conversion of digit strings according to this embodiment between differing representation sizes may be implemented by masking off the length field, shifting the digits as a group to the appropriate position in the new representation, and then adding back the length. In cases where a larger digit string representation is to be converted to a smaller digit string representation, a designer may choose how to implement the conversion in a manner appropriate for the particular application. This may be occur, for example, if new representation is too small to accommodate the actual length of the value being converted. One possible implementation, for example, may comprise a rule such that, when converting from a 15-digit (maximum) string representation according to this embodiment, to a 7-digit (maximum) string representation, values with lengths of zero through seven may be converted precisely whereas values with lengths of eight through fifteen may be truncated to include only the seven left-most digits. Another possible implementation would be to raise an error condition whenever the source (*i.e*., the digit string value to be converted) has a length greater than the maximum length allowed for the destination (*i.e*., the digit string representation to which conversion is being attempted).

Comparison of digit strings according to this embodiment of the present invention may be implemented as simple (unsigned) integer comparison when the same representation format is used. This is possible because digit string represented according to the present invention, comprising a length field positioned in the least-significant bits of the string yields an appropriate lexicographic ordering of the strings.

Deleting trailing digits from a digit string according to this embodiment may be implemented by masking off and clearing the digits to be deleted and also decreasing the value stored in the length field appropriately.

Deleting leading digits from a digit string according to this embodiment may be implemented by masking off the length field, shifting the digits left, and then reinserting a length field containing the new length value.

Concatenating two in a digit strings according to this embodiment may be implemented by masking off the length field of the right operand (*i.e*., the second string), shifting the digits right to the appropriate position, and merging with the left operand (*i.e*., the first string). The value stored in the length field of the result would then have to be increased by the length value of the right operand. Again, a given implementation may define appropriate behavior to accommodate the situation in which the sum of the two operands' lengths exceeds the maximum value allowed for the length field.

Deleting digits from the middle of a digit string according to this embodiment or inserting one string into the middle of another requires slightly more complex shifting and masking, but the implementation of each case would be apparent to a skilled programmer.

Computing the successor of a digit string according to this embodiment (*i.e*., the next legitimate digit string in a sequence of digit strings implemented according to this embodiment) may be implemented in the following manner. First compare the value stored in the length field with the maximum length value allowed by the particular representation. If the value is less than the maximum (*e.g.,* seven in a 7-digit (maximum) string) then the successor may be obtained by adding a "0" digit at the right end, thereby increasing the length value by one. Because unused digits should already contain "0", this can be accomplished by just incrementing the length field. Otherwise, if the length field is already at the maximum, then the successor may be obtained by incrementing the last digit in the string (*e.g.,* the seventh digit in a 7-digit (maximum) string). If that digit carries over, for example, from "F" to "0", then the successor may be obtained by decreasing the length value by one and incrementing the preceding digit, repeating similarly for preceding digit positions if there are any further carry-overs. If this results in decrementing the length to zero and carrying out of the first digit field, then the original digit string must have been the maximum value allowed by the representation (*e.g.,* all "F"s), for which the successor is not well defined. In this case an implementation-specific error-behavior may be implemented.

Similarly, computing the predecessor of a digit string according to this embodiment (*i.e*., the next legitimate digit string in a sequence of digit strings immediately preceding the given string) may be implemented by testing the *l*th digit of the string, where *l* is the length value of the given string. If the *l*th digit has a value of "0", the predecessor may be obtained by decrementing the value in the length field. Otherwise, if the *l*th digit is non-zero the predecessor may be obtained by decrementing the value in the *l*th digit, and, if *l* is not already the maximum length, change all following digits (*i.e*., *l*+1, *l*+2, and so on) to the maximum digit value (*e.g*., "F"), and change the value in the length field to the maximum length value (*e.g*., to seven for a 7-digit (maximum) string). If the original length, *l*, is zero, then there are no digits to be examined and the original digit string must have been the zero-length string, for which the predecessor is not well defined. In this case an implementation-specific error-behavior may be selected.

As would be apparent to one skilled in the art, there are many equivalent algorithms for computing the various useful operations on digit strings according to this embodiment. Some of these algorithms may be more efficient than others. For example, the incrementing of digits described above for computing the successor operation might in some cases be performed using a single addition operation. A loop is only needed to locate the last non-zero digit so that the length can be set appropriately. Furthermore, for certain target computer architectures and floating-point representations, this loop might be replaced with an appropriate non-looping sequence of negation, masking, and convert-integer-to-floating-point operations.

Although the above examples use a digit range comprising the digits "0" through "F", other digit ranges may be accommodated. For example, if a particular application uses only digits "1" through "9" references to digit values of "0" or "F" in the above examples would apply to the values "1" and "9", respectively.

### II. Second Exemplary Embodiment

A second exemplary embodiment of the present invention comprises a digit string representation format having the length field at the most-significant end of the underlying integer. Digit strings according to this embodiment still employ an underlying representation of fixed-width, unsigned, binary integers. By shifting the length field to the most-significant end of the string, the sort order for a sequence of digit strings is changed. As will be described in more detail below, the sort order yielded by digit strings according to either the first or second embodiments of the present invention may be advantageously used to simplify many digit string problems.

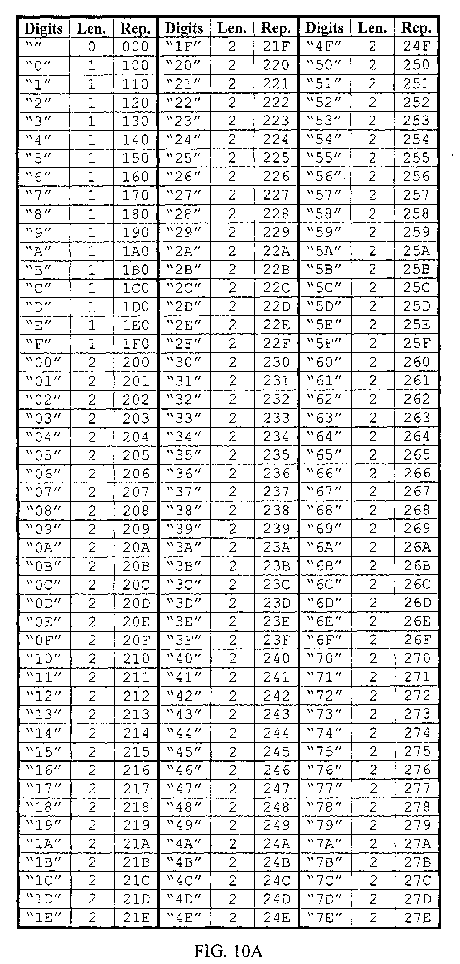

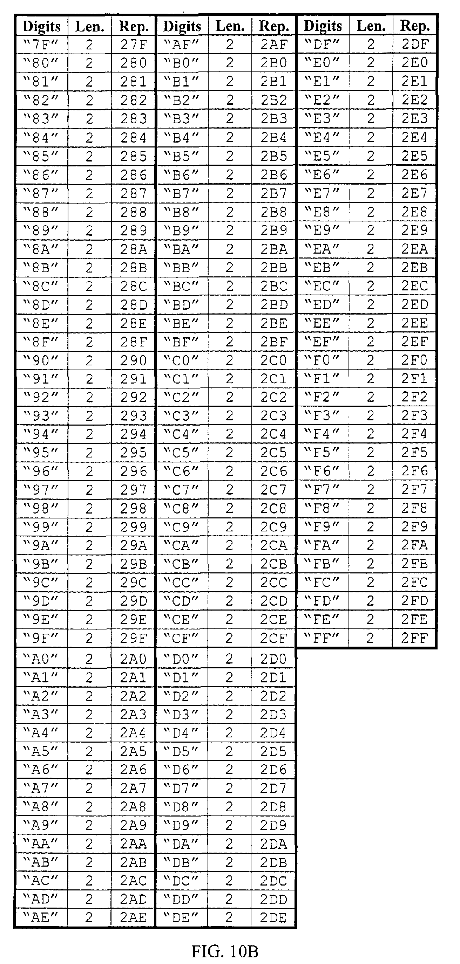

Figures 10A through 10B enumerate, in ascending order, all possible values of a 2-digit (maximum) string stored in a 16-bit word with the length field right-justified in the first four bits. Each digit may be in the range "0" through "F". (No "special values" are shown in the list.)

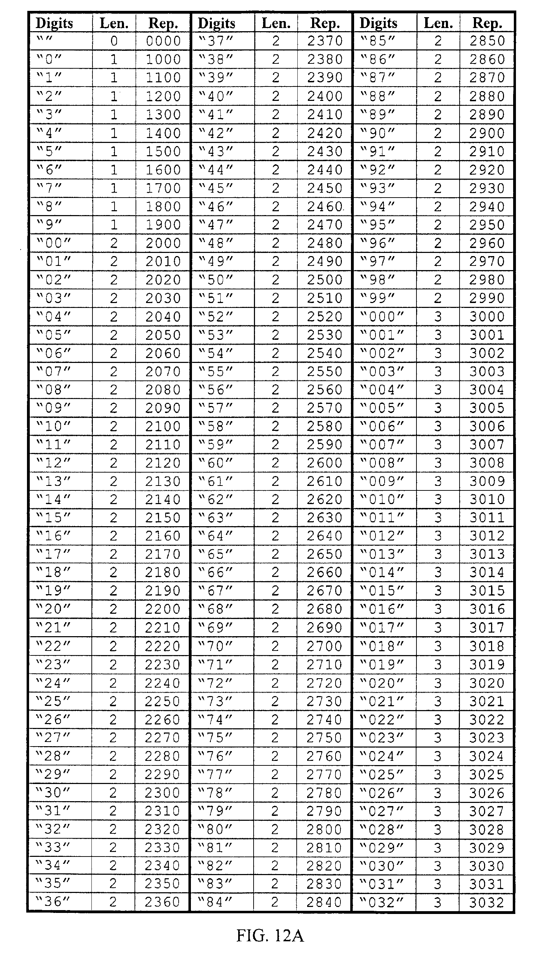

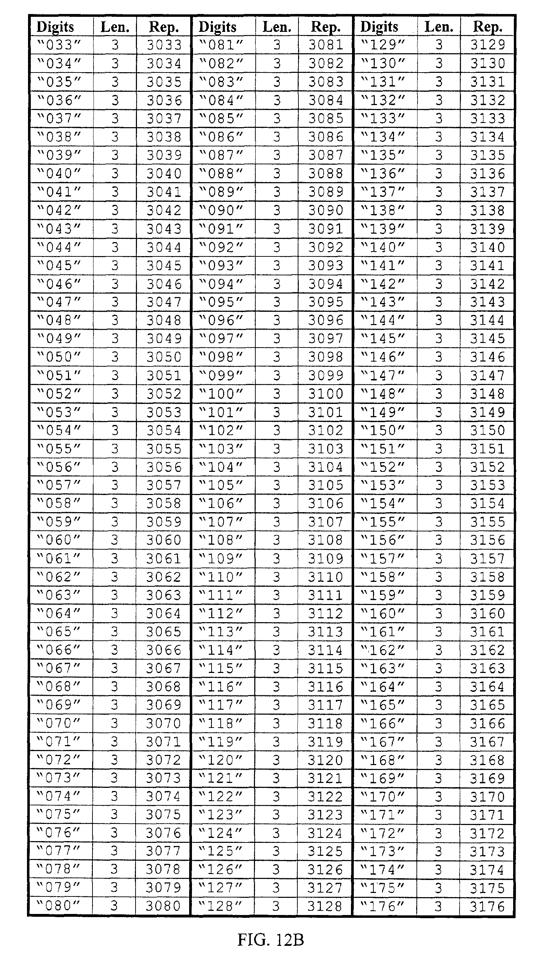

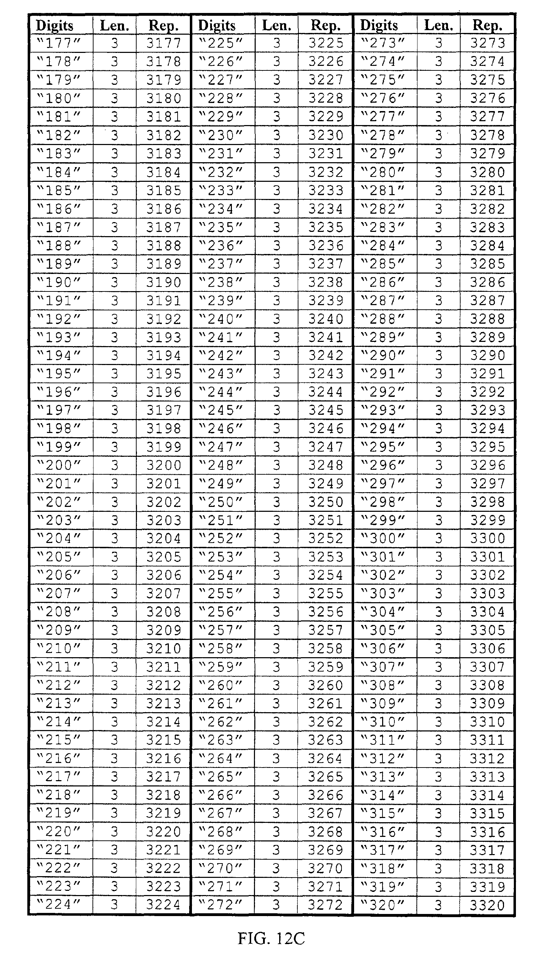

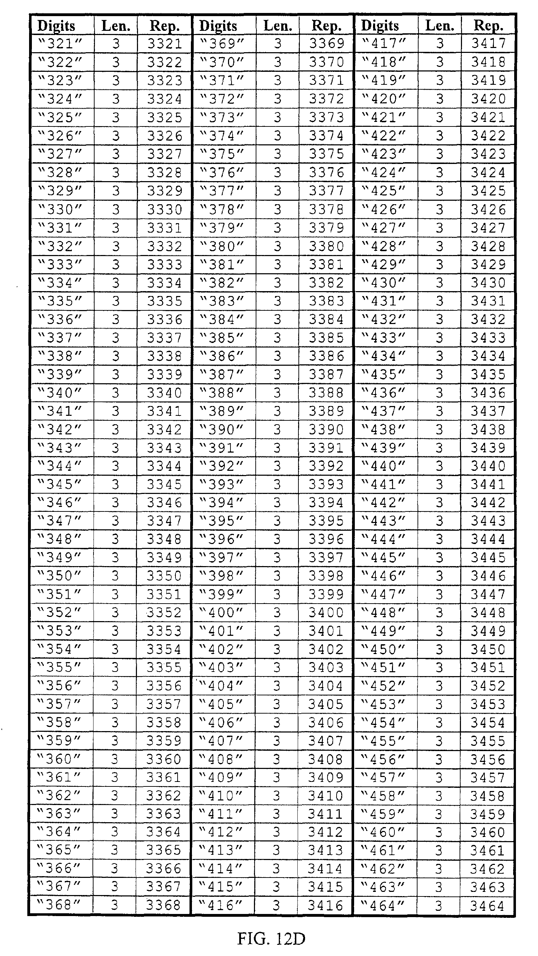

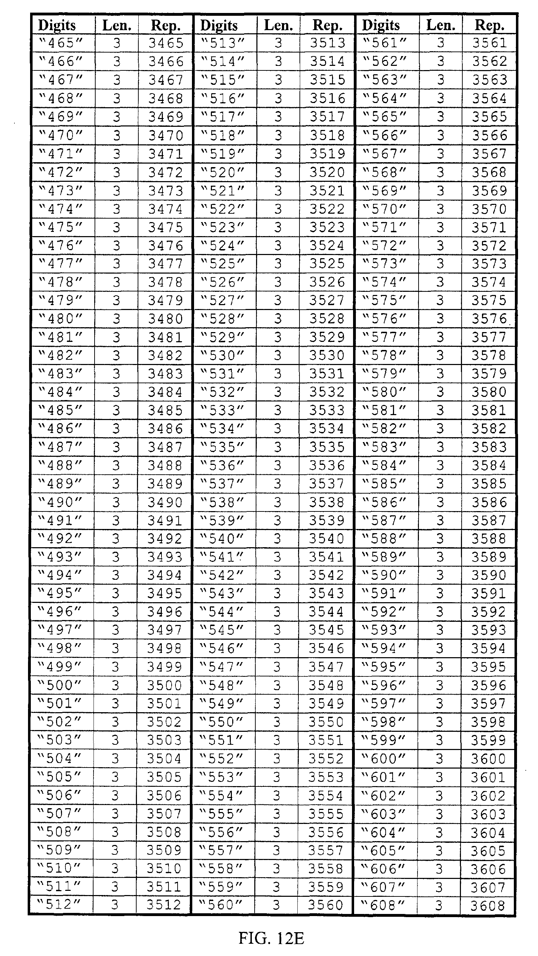

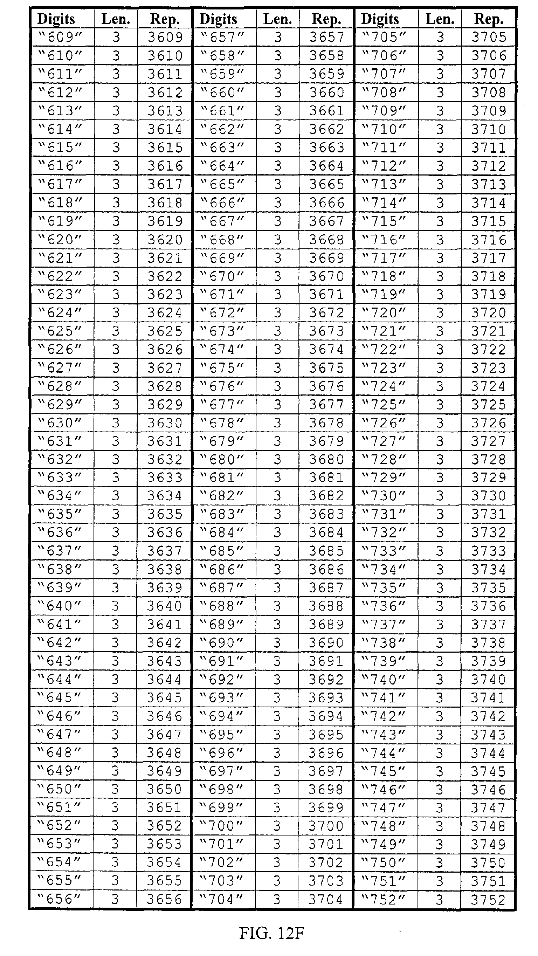

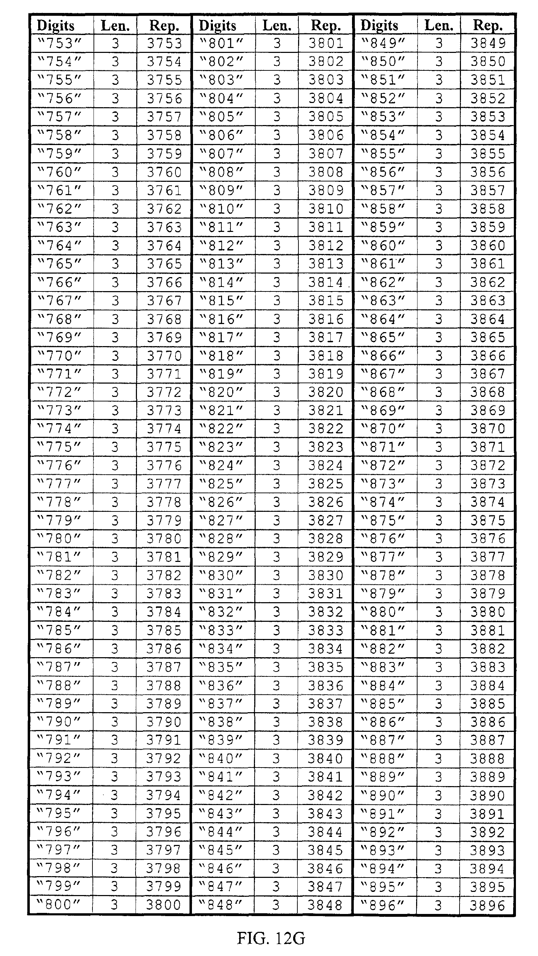

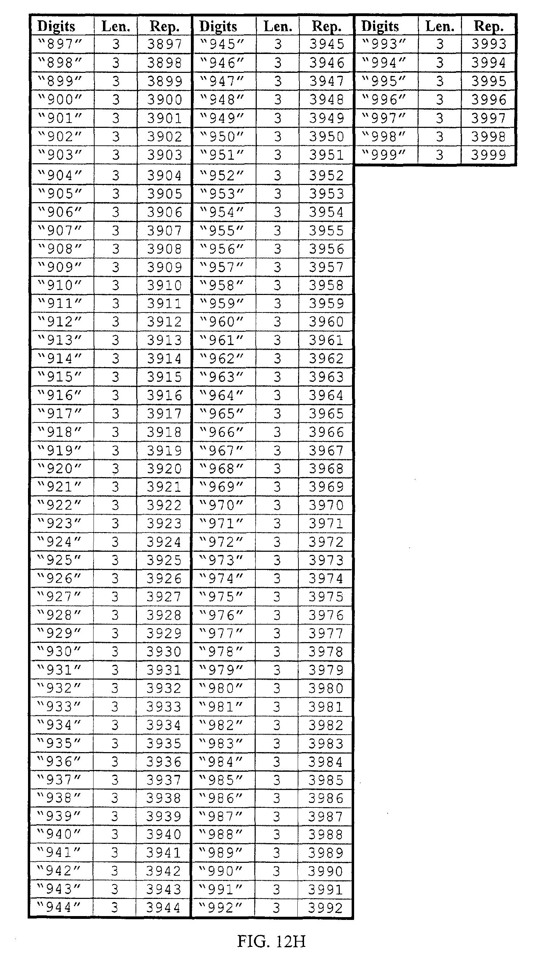

Figures 12A through 12H enumerate, in ascending order, all possible values of a 3-digit (maximum) string stored in a 16-bit word with the length field right-justified in the first four bits. Each digit may be in the range "0" through "9". (Again, no "special values" are shown in the list.)

All of the operations listed above that may be performed on embodiments including a length field at the end of the digit string may implemented in a similar manner for embodiments including a length field at the beginning of the digit string.

Special values, as described above, may be similarly implemented in embodiments including a length field at the beginning of the digit string.

### III. Ordering of Digit Strings

The digit string representation according to the first embodiment provides an ordering that is roughly equivalent to the standard rules for lexicographic (alphabetical) ordering:
1. If one digit string value is a prefix of the other, longer, digit string value (*i.e*., the digit strings are identical for the first *n* digits of each, where *n* is the minimum of their lengths), then the shorter string precedes the longer one. For example, "1234" precedes (is less than) both "12340" and "12345".
2. If neither digit string value is a prefix of the other (*i.e*., the digit strings differ anywhere in the first *n* digits of each, where *n* is the minimum of their lengths), then the ordering of the two strings is determined by the ordering of the leftmost (most significant) non-matching, correspondingly positioned, digits. For example, "12345678" precedes "123480" because "5" precedes "8".
3. As a result of these rules, the full range of digit strings according to the first embodiment may be ordered as shown in Figure 6A (with omissions denoted by "..."). The example shown in Figure 6A provides ordering for strings comprising digits "0" through "F" and is not bounded by a maximum string length.
4. The very last value in the ordered sequence of digit strings would consist of a string comprising only the maximum digit allowed in a particular implementation repeated up to the maximal length of the string. For example, if the maximal length is seven and the maximal digit in the string is "F", then the last legitimate value in the sorted sequence would be "FFFFFFF".

In contrast to the above sorting rules, the digit string representation according to the second embodiment provides an ordering that is roughly equivalent to the standard rules for numerical ordering except that leading zeros are significant:
1. If the digit strings are of different length, then the shorter one precedes the longer one.
2. If the digit strings have the same length but not the same value, then the ordering of the two digit strings is determined by the ordering of the leftmost non-matching, correspondingly-positioned, digits. For example, "1234" precedes (is less than) "1280" because "3" precedes "8".
3. As a result of these rules, the full range of digit strings according to the second embodiment may be ordered as shown in Figure 6B (with omissions denoted by "..."). As with the first embodiment, the very last value would consist of all maximum digit values (*e.g*., all "F"s) to whatever the maximal length is for a particular implementation.

### IV. Range-Based Searches

Unlike some conventional searching techniques, the present invention allows range-based matching at run-time. That is, instead of matching only a single presented key value, rows in a range-based table implemented according to the present invention may match ranges of presented key values. Each row is provisioned with both a Range Start value and a Range End value (with the former less than or equal to the latter). No two rows are allowed to have overlapping ranges. When searching with a particular presented key value, the row selected is the one that indicates a range that contains that key value. That is, when searching for the value X, the row matched will be the one where Range Start ≤ X ≤ Range End. If there is no row provisioned with a range that includes the presented key value, then the search fails.

Because the ranges of rows are not allowed to overlap, the rows may be uniquely ordered. Either the Range Start or the Range End value may be used for this sort operation; the ordering will be the same in either case. Searches of range-based tables can use normal sort-based indexing techniques, such as binary search or various forms of trees. For example, the table may be searched for the row containing the largest Row Start value that is less than or equal to the presented value. If such a candidate row is found, then it can be validated as a match by comparing the Range End value of the candidate row with presented value. If the Range End value is greater than or equal to the presented value, then the row would be considered a match. On the other hand, if the Range End value is less than the presented value, then no matching row exists. (Alternatively and equivalently, a search may locate the row with the smallest Range End value that is greater than or equal to the presented value and then verify that the Range Start value of that row for is less than or equal to the presented value.)

### a. Using Digit Strings in Conjunction with Range-Based Searches

In embodiments of the present invention, digit strings may be used as the keys with range-based tables. For example, such tables can be used to control processing and routing of telephone calls according to blocks of contiguous numbers.

There is little difference between the first and second embodiments, described above, other than the ordering of values. That is, either representation can be implemented with about the same efficiency with respect to storage requirements and also with respect to computation. Because the values for the two representations sort quite differently, however, each representation may be useful for particular applications.

An embodiment including a length field at the end of the digit string is particularly useful for range-based searches where digit strings that have the same leading digits should be grouped together. For example, routing of telephone calls according to the called number typically involves using some number of leading digits and ignoring trailing digits that follow. In this case, only the leading digits are significant, regardless of the length of the number. Digit strings expressed according to this embodiment may also be useful for range-based searches of ZIP codes, which, like telephone numbers, are hierarchical in nature.

An embodiment including a length field at the beginning of the digit string is particularly useful for range-based searches where digit strings that have a particular length should be grouped together. For example, in an abbreviated dialing application, it may be preferable to distinguish 4-digit abbreviations from 7-digit and 10-digit numbers. 4-digit numbers might be interpreted as extension numbers within a company whereas 7-digit and 10-digit numbers would be interpreted as external numbers. In this case, the fact that a 4-digit and a 10-digit number happen to have the same leading digits should not be considered relevant.

Many applications using an embodiment including a length field at the beginning of the digit string may be similar to prefix matching with respect to matching a range of values based upon leading digits and ignoring the remaining digits. For example, to match any value starting with "913" or "914", a row may be created with a Range Start value of "913" and a Range End value of "913FFFFFF..." with as many "F"s appended as will fit in the particular representation being used. The data provisioner (*i.e*., data-entry person or application) for such a row should not, however, have to know what the underlying representation is and so should not have to know how many "F"s to append. In fact, the provisioner may not even know what the maximum digit value is. For example, in some applications it might be "F" while in other it might be "9" or even "Z" or some other value.

To this end, it may be useful to adopt a notation for Range End values that allows for automatic filling with trailing maximum digit values (such as "F"s). In many applications, only some, not all, Range End values should be so padded with the maximum digit value. For example, to route operator-assisted calls with the North American Numbering Plan, it may be preferable to distinguish four categories of numbers used to call operators: "0", "00", "0"+number (e.g., "02024561414"), and "00"+number. Although there are many syntactic mechanisms that may be used to indicate whether to pad or not, one such mechanism is the following:
- Range End values to be padded with the maximum digit may be represented externally by following the significant digits with a "+" character.
- Range End values not to be padded may be represented externally by following the significant digits with a "-" character.

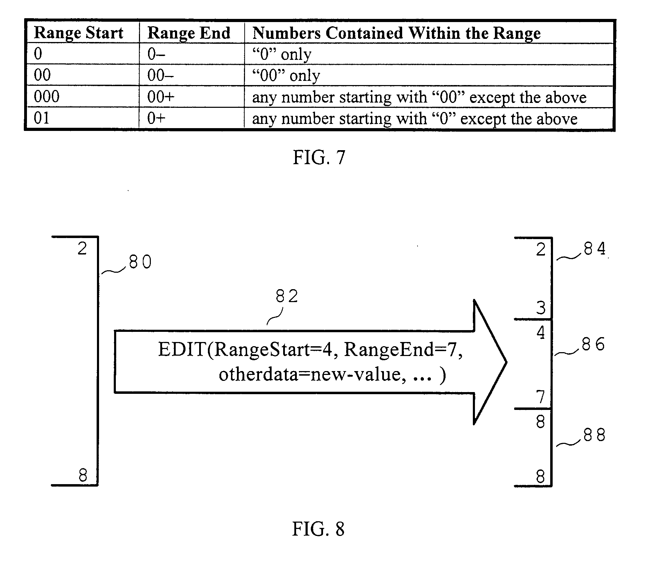

Figure 7 shows how the four rows indicated above may be represented according to this method.

Alternative external representations of Range End values are possible, perhaps involving prefices and/or suffices. Other representations might omit the suffix from one of the two meanings. Two examples of such other syntaxes include:
- "+" (or "*") suffix for padding, no suffix for no padding
- no suffix for padding, "." (or "!") suffix for no padding

Note that explicitly requiring a suffix to appear on every Range End value may have value because it may help remind the data-entry person to explicitly decide which behavior is appropriate

### b. Row Splitting

Although overlapping and nested ranges are prohibited, the provisioning system may make special allowance for provisioning ranges within ranges by automatically splitting the original containing range as needed. For example if a range-matching table uses an integer for its key, row 80 (in Figure 8) covering the range "2" through "8" may initially be added to a table. An operator may later wish to change the behavior (*i.e*., change the other data values) associated with some values that form a sub-range of this original range. In this case, an editing command can be used to create a new row covering the range "4" through "7". Figure 8 shows an example of a typical editing command in arrow 82. As a result of this command, the table grows to three rows. Row 84 covers the range "2-3". Row 86 covers the range "4-7". Row 88 covers the range "8-8". The Range Start value of row 84 is the original Range Start (*i.e.*, for row 80) while the Range End value of row 88 is the original Range End value. The Range Start and Range End values for row 86 reflect the updated sub-range.

Depending upon the Range Start and Range End values specified, an edit of a range-based row may result in one, two, or three replacement rows, representing the unchanged sub-range above the update (if any), the updated sub-range, and the unchanged sub-range below the update (if any).

Similarly, deletions from a range-based table may result in a row being replaced by zero, one, or two new rows, representing the unchanged sub-range above the deletion (if any) and the unchanged sub-range below the deletion (if any).

Due to row-splitting, the following four provisioning operations, executed in the order shown, will result in the same rows as shown in Figure 7:
- create a row for the range "0" through "0+"
- edit the sub-range "0" through "0-"
- edit the sub-range "00" through "00+"
- edit the sub-range "00" through "00-"

### c. Row Merging

To reduce the number of rows stored in a table, an implementation may also choose to merge rows that cover adjacent ranges and are identical except for the range bounds. That is, if the end of one row's range is immediately followed by the beginning of another row's range and the two rows are identical other than their ranges, then they can be merged. The Range Start value for the new row would be copied from the Range Start value of the first row and the Range End value would be copied from the Range End value of the second row. All other values in the merged row would be the same as the (identical) values in the both of the original rows.

Row-merging may, for example, be performed following any update or create operation. In this case, the modified (or newly created) rows may each be checked against both the preceding and following rows for possible merging with one, the other, or both.

### d. Fully vs. Partially Populated Tables

Embodiments of the present invention include at least two distinct models for range-based tables, fully populated and partially populated. An implementation of range-based searches may use either of these models as described below.

In a fully populated table, the provisioning rules may guarantee that the following constraints are met at all times:
1. There is at least one row in the table.
2. The first row's range will start at the first possible digit string (*e.g*., the null string, "").
3. The last row's range will end at the last possible digit string *(e.g.,* a string comprising all maximum digit values, such as all "F"s).
4. Each intermediate row's range will start immediately following the end of the range for the preceding row.
5. Each intermediate row's range will end immediately before the start of the range for the following row.

The net effect of implementing these rules in an embodiment is that every possible presented value will match exactly one row.

One advantage of fully populated tables is that the Range End value need not be explicitly stored with each row. For all but the last row, it can be derived from the Range Start value of the following row. The Range End value of the last row in the table would be the last possible string (*e.g*., "F"s). (Alternatively, the Range Start value could be omitted and computed from the Range End value of the preceding row).

In a partially populated table, the provisioning rules may include a less stringent guarantee:
1. No two rows are allowed to have overlapping ranges. The net effect of this rule is that every possible presented value will match either one row or no rows.

There may be some consequences associated with each of the two models presented above. First, for partially populated tables, appropriate actions may need to be defined for the case where no row is matched during a search. Second, for fully populated tables, create and delete operations do not really exist; instead such operations may be defined as special cases of update operations that may split (or join) rows. In the case of deletions, appropriate default values may have to be provided for non-key values in the row. Such values might come, for example, from adjacent rows or from table-wide defaults or from some other source.

### e. Compound Keys, Partially Range-Based

Range-based keys may be used as part of compound keys. Typically, only one range-based key makes sense in such compound keys; the other components should be exact match. For example, under SS7 and related standards, traditional telephone numbers are qualified by a Nature of Address (NOA) and Numbering Plan Indicator (NPI). To handle this, there would be four key values specified for each row of this table: NOA, NPI, Digits Start, and Digits End. The row selected, if any, would be the one for which the presented NOA and NPI values exactly match the corresponding provisioned keys in the row and for which the presented digits were within the range Digits Start through Digits End, as provisioned in that row.

Depending upon the context, it might be appropriate to merge the exact-match fields and the range-based digit strings into a single representation for the purposes of searching. For example, in the case of SS7 telephone numbers, one might instead have Range Start and Range End values that each incorporate the NOA and NPI as leading digits, prepended to the digit string representation. At the expense of representing the NOA and NPI values twice (once each in the Range Start and once each in the Range End), so doing would allow all three of the NOA, NPI, and the variable number of digits to be compared in a single comparison operation, thereby speeding searches.

### f. Ambiguity Checking

In some situations, all digits of a number may not be available at once. For example, many European telephony signaling systems deliver digits in batches. Under such an "overlapped dialing" scheme, it is sometimes impossible to know whether a presented number is complete or incomplete without knowing the details of the numbering plan at the ultimate destination (which might even be a private branch exchange programmed by a customer). Instead, each switch in the path of a call is expected to wait only until it has received enough digits to uniquely determine the path for the call. Any digits beyond this minimum may be ignored (but should, of course, be passed on).

The combination of range-based searching with the ordering of values defined by the first embodiment of the present invention, described above, is particularly appropriate for solving the problems associated with overlapped dialing, and other such situations requiring ambiguity checking. As a result of representing the digit strings according to the first embodiment, the sorting order provides that each value immediately precedes all other values of which that value is a prefix. That is, if *P* is a digit string and *PZ* is another digit string such that *P* is a prefix of *PZ*, then either
1. *PZ* will appear immediately after *P* in the sorting order, or
2. *PZ* will appear after *P* and will be separated from *P* only by other digit strings, *PY*_{*1*}*, PY*_{*2*}*, ..., PY*_{*n*}, where *P* is also a prefix of each of those other digit strings.

Because of this property, if row merging is performed whenever possible, then it is easy to determine whether the arrival of more digits might affect the result of a search: one need look only at the row matched by the digits received thus far or the immediately following row. For the fully populated model, this algorithm is simple; for the partially populated model it is only slightly more complex; each of them are considered in turn.

In each case below, assume that *V* is the presented key value and that *FF(x)* is an idempotent function that returns a value computed from its parameter, *x*, by padding it on the right with as many maximum digits (*e.g*., all "F"s) as are allowed by the particular representation. Note that all strings of which *V* is a prefix, and only such strings, will be contained in the range *V* through *FF(V)*.

For fully populated tables, the following rules may be applied:
1. Find the row matching (containing) *V.*
2. If the range of that row also contains *FF(V)*, then the addition of more digits cannot affect the result.
3. If the range of that row does not contain *FF(V)*, then the addition of more digits might affect the result because a following row might be selected. That is, the current result is ambiguous. (Remember the assumption that adjacent, similar, rows will have been merged.)

For partially populated tables, the following rules may be applied:
1. Find the row matching (containing) *V* (if there is one).
2. If such a row exists, then if the range of that row also contains *FF(V)*, then the addition of more digits cannot affect the result.
3. Again if such a row exists, then if the range of that row does not contain *FF(V)*, then the addition of more digits might affect the result because either because a following row might be selected or because no row might be matched. That is, the current result is ambiguous.
4. If no row is found that matches (contains) *V,* then instead find the first row that has a Range Start that is greater than *V* (if there is one). That is, look for the row that has the smallest Range Start that exceeds *V.* (An optimization note: This row will be the one immediately following the position of a row that would have matched *V* and so can probably be found during the same search operation as the unsuccessful search for a matching row.)
5. If no such row is found, then the value *V* must follow the ranges of all rows in the table (or the table might have no rows at all). In this case, then the addition of more digits cannot affect the result.
6. If such a following row is found, then compare *FF(V)* with the Range Start value of that row.
7. If *FF(V)* is less than the Range Start value of the following row, then the addition of more digits cannot affect the result: no row can be matched no matter what digits are appended to *V*.
8. If *FF(V)* is greater than or equal to the Range Start value of the following row, then the addition of more digits might affect the result: *V* has no matching row but adding digits might result in a match. That is, the current result is ambiguous.

Because the actual search operations performed are similar, whether more digits might arrive or not, the above rules can be implemented toward the end of a table search operation: if all digits are known to be present, then do not perform any special ambiguity checking. On the other hand, if more digits might arrive, then also perform the above-specified ambiguity checking and if result is ambiguous, then choose an appropriate action (such as gathering more digits and then searching again).

### V. Generality of the Present Invention

Although this description of the invention may use examples related to the field of telephony, it is also suitable for other environments.

The foregoing disclosure of the preferred embodiments of the present invention has been presented for purposes of illustration and description. It is not intended to be exhaustive or to limit the invention to the precise forms disclosed. Many variations and modifications of the embodiments described herein will be apparent to one of ordinary skill in the art in light of the above disclosure. The scope of the invention is to be defined only by the claims appended hereto, and by their equivalents.

Further, in describing representative embodiments of the present invention, the specification may have presented the method and/or process of the present invention as a particular sequence of steps. However, to the extent that the method or process does not rely on the particular order of steps set forth herein, the method or process should not be limited to the particular sequence of steps described. As one of ordinary skill in the art would appreciate, other sequences of steps may be possible. Therefore, the particular order of the steps set forth in the specification should not be construed as limitations on the claims. In addition, the claims directed to the method and/or process of the present invention should not be limited to the performance of their steps in the order written, and one skilled in the art can readily appreciate that the sequences may be varied and still remain within the spirit and scope of the present invention.

## Claims

1. A high performance data engine comprising:
(a) a computer system including a central processing unit, a memory and programming logic; and
(b) a data table comprising a plurality of data structures, wherein each of said data structures includes at least a first portion and a second portion, said first portion storing a data value, said second portion storing a length value associated with the data value,
wherein, when the plurality of data structures are sorted in the data table, if a first data value comprising N digits and a second data value comprising at least N+1 digits comprise an identical string of digits for the first N digits, then the first data value precedes the second data value in the sorted data table,
wherein if a third data value comprising M digits and a fourth data value comprising at least M digits comprise an identical string of digits only for the first Q digits where Q < M, then the ordering of the third and fourth data values is determined by the ordering of the (Q+1)^{st} digit from the third data value and the (Q+1)^{st} digit from the second data value.

2. The high performance data engine of claim 1, wherein the first portion precedes the second portion in the data structure.

3. The high performance data engine of claim 1, wherein the data table further comprises a plurality of rows, each of said rows comprising a set of data structures.

4. The high performance data engine of claim 3, wherein each of said rows further comprises a start range value, wherein said start range value identifies a first member of the set of data structures comprising each of said rows.

5. The high performance data engine of claim 3, wherein each of said rows further comprises an end range value, wherein said end range value identifies a last member of the set of data structures comprising each of said rows.

6. The high performance data engine of claim 3, wherein each of said rows further comprises a start range value and an end range value, wherein said start range value identifies a first member of the set of data structures comprising each of said rows and , wherein said end range value identifies a last member of the set of data structures comprising each of said rows.

7. A high performance data engine comprising:
(a) a computer system including a central processing unit, a memory and programming logic; and
(b) a data table comprising a plurality of data structures, wherein each of said data structures includes at least a first portion and a second portion, said first portion storing a data value, said second portion storing a length value associated with the data value,
wherein, when the plurality of data structures are sorted in the data table, if a first data value comprises N digits and a second data value comprises at least N+1 digits, then the first data value precedes the second data value in the sorted data table,
wherein, if a third data value and a fourth data value both comprise M digits, and if the third data value and the fourth data value comprise an identical string of digits only for the first Q digits where Q < M, then the ordering of the first and second data values is determined by the ordering of the (Q+1)^{st} digit from the first data value and the (Q+1)^{st} digit from the second data value.

8. The high performance data engine of claim 7, wherein the second portion precedes the first portion in the data structure.

9. The high-performance data engine of claim 1 for use in data processing operations in the field of telephony.

10. The high-performance data engine of claim 1 wherein the data strings comprise telephone numbers.

11. The high-performance data engine of claim 1 wherein the data strings comprise postal routing codes.

12. A high performance data engine comprising:
(a) a computer system including a central processing unit, a memory and programming logic; and
(b) a plurality of data structures, wherein each of said data structures includes at least a first portion and a second portion, said first portion storing a data string, said second portion storing a length value associated with the data string;
wherein, each data structure has a predetermined fixed width, and
wherein the data string in each data structure represents a digit string of length zero or more, up to a predetermined maximum length, wherein said maximum length corresponds to a number of sub-fields provided in the first portion of the data structure.

13. The high performance data engine of claim 12, wherein each of said data structures comprises an unsigned integer used in manipulation and comparison operations in a computing process.

14. The high-performance data engine of claim 12 for use in data processing operations in the field of telephony.

15. The high-performance data engine of claim 12 wherein the data strings comprise telephone numbers.

16. The high-performance data engine of claim 12 wherein the data strings comprise postal routing codes.

17. The high performance data engine of claim 12, wherein each of said data structures comprises a multi-word unsigned integer used in manipulation and comparison operations in a computing process.

18. The high performance data engine of claim 12, wherein the length value follows the digit string the data structure so that it is considered less significant in a comparison operation, yielding a sorting order for a first digit string having a first length value and a second digit sting having a second length value wherein:
(a) if the first digit string is identical to second digit string, for the first n digits of the first and the second digit strings, where n is the minimum of the first and the second length values, then the digit string having shorter length value precedes the data string having the longer length value; otherwise
(b) if the first and second digit strings differ anywhere in the first n digits of the first and the second data strings, then the sorting order of the first and second strings is determined by an ordering of a leftmost non-matching correspondingly positioned digit in the first and second data strings.

19. The high performance data engine of claim 12, wherein the length value precedes the data value so that it is considered more significant in a comparison operation, yielding a sorting order for a first digit string having a first length value and a second digit sting having a second length value wherein:
(a) if the first length value is not equal to the second length value, then the digit string having shorter length string precedes the digit string having the longer length, otherwise
(b) if the first length value is equal to the second length value and if the first digit string is not equal to the second digit string, then the ordering of the first and second digit strings is determined by an ordering of a leftmost non-matching, correspondingly positioned, digit in the first and second digit strings

20. The high performance data engine of claim 12, wherein the plurality of data structures are organized into a plurality of rows in a data table, wherein each row comprises a set of data structures and a start range value identifying a first member of the set of data structures comprising each of said rows.

21. The high-performance data engine of claim 20, wherein each start range value is stored in a data structure in a row.

22. The high-performance data engine of claim 21 wherein the length value follows the digit string the data structure so that it is considered less significant in a comparison operation, yielding a sorting order for a first digit string having a first length value and a second digit sting having a second length value wherein:
(a) if the first digit string is identical to second digit string, for the first n digits of the first and the second digit strings, where n is the minimum of the first and the second length values, then the digit string having shorter length value precedes the data string having the longer length value; otherwise
(b) if the first and second digit strings differ anywhere in the first n digits of the first and the second data strings, then the sorting order of the first and second strings is determined by an ordering of a leftmost non-matching correspondingly positioned digit in the first and second data strings.

23. The high-performance data engine of claim 20, wherein an ambiguous digit string is detected using a special comparison operation with a candidate matching row or a row following the candidate matching row.

24. The high-performance data engine of claim 20, further comprising an end range value identifying a last member of the set of data structures comprising each of said rows.

25. The high-performance data engine of claim 24, wherein each end range value stored in a data structure in a row.

26. The high-performance data engine of claim 25 wherein the length value follows the digit string the data structure so that it is considered less significant in a comparison operation, yielding a sorting order for a first digit string having a first length value and a second digit sting having a second length value wherein:
(a) if the first digit string is identical to second digit string, for the first n digits of the first and the second digit strings, where n is the minimum of the first and the second length values, then the digit string having shorter length value precedes the data string having the longer length value; otherwise
(b) if the first and second digit strings differ anywhere in the first n digits of the first and the second data strings, then the sorting order of the first and second strings is determined by an ordering of a leftmost non-matching correspondingly positioned digit in the first and second data strings.

27. The high-performance data engine of claim 24, wherein an ambiguous digit string is detected using a special comparison operation with a candidate matching row or a row following the candidate matching row.

28. The high performance data engine of claim 12, wherein the plurality of data structures are organized into a plurality of rows in a data table, wherein each row comprises a set of data structures and an end range value identifying a last member of the set of data structures comprising each of said rows.

29. The high-performance data engine of claim 28, wherein each end range value is stored in a data structure in a row.

30. The high-performance data engine of claim 29, wherein the length value follows the digit string the data structure so that it is considered less significant in a comparison operation, yielding a sorting order for a first digit string having a first length value and a second digit sting having a second length value wherein:
(a) if the first digit string is identical to second digit string, for the first n digits of the first and the second digit strings, where n is the minimum of the first and the second length values, then the digit string having shorter length value precedes the data string having the longer length value; otherwise
(b) if the first and second digit strings differ anywhere in the first n digits of the first and the second data strings, then the sorting order of the first and second strings is determined by an ordering of a leftmost non-matching correspondingly positioned digit in the first and second data strings.

31. The high-performance data engine of claim 28, wherein an ambiguous digit string is detected using a special comparison operation with a candidate matching row or a row following the candidate matching row.

32. The high performance data engine of claim 12, wherein the plurality of data structures are organized into a plurality of rows in a data table, wherein each row comprises a set of data structures and a start range value identifying a first member of the set of data structures comprising each of said rows and an end range value identifying a last member of the set of data structures comprising each of said rows.

33. The high-performance data engine of claim 32, wherein each start range value and each end range value is stored in a data structure in a row.

34. The high-performance data engine of claim 33, wherein the length value follows the digit string the data structure so that it is considered less significant in a comparison operation, yielding a sorting order for a first digit string having a first length value and a second digit sting having a second length value wherein:
(a) if the first digit string is identical to second digit string, for the first n digits of the first and the second digit strings, where n is the minimum of the first and the second length values, then the digit string having shorter length value precedes the data string having the longer length value; otherwise
(b) if the first and second digit strings differ anywhere in the first n digits of the first and the second data strings, then the sorting order of the first and second strings is determined by an ordering of a leftmost non-matching correspondingly positioned digit in the first and second data strings.

35. The high-performance data engine of claim 32, wherein an ambiguous digit string is detected using a special comparison operation with a candidate matching row or a row following the candidate matching row.

36. The high-performance data engine of claim 32 for use in data processing operations in the field of telephony.

37. The high-performance data engine of claim 32, wherein the data strings comprise telephone numbers.

38. The high-performance data engine of claim 32, wherein the data strings comprise postal routing codes.

39. A method for high performance data processing, said method comprising:
storing a plurality of data structures in a data table, wherein each of said data structures includes at least a first portion and a second portion, said first portion storing a data value, said second portion storing a length value associated with the data value; and
sorting the data table wherein, if a first data value comprising N digits and a second data value comprising at least N+1 digits comprise an identical string of digits for the first N digits, then the first data value precedes the second data value in the sorted data table,
wherein, if a third data value comprising M digits and a fourth data value comprising at least M digits comprise an identical string of digits only for the first Q digits where Q < M, then the ordering of the first and second data values is determined by the ordering of the (Q+1)^{st} digit from the first data value and the (Q+1)^{st} digit from the second data value.

40. The method of claim 39, wherein the first portion precedes the second portion in the data structure.

41. The method of claim 39, wherein the data table further comprises a plurality of rows, each of said rows comprising a set of data structures.

42. The method of claim 41, wherein each of said rows further comprises a start range value, wherein said start range value identifies a first member of the set of data structures comprising each of said rows.

43. The method of claim 41, wherein each of said rows further comprises an end range value, wherein said end range value identifies a last member of the set of data structures comprising each of said rows.

44. The method of claim 41, wherein each of said rows further comprises a start range value and an end range value, wherein said start range value identifies a first member of the set of data structures comprising each of said rows and , wherein said end range value identifies a last member of the set of data structures comprising each of said rows.

45. A method for high performance data processing, said method comprising:
creating a data table comprising a plurality of data structures, wherein each of said data structures includes at least a first portion and a second portion, said first portion storing a data value, said second portion storing a length value associated with the data value; and
sorting the data table wherein, if a first data value comprises N digits and a second data value comprises at least N+1 digits, then the first data value precedes the second data value in the sorted data table, and
wherein, if a third data value and a fourth data value both comprise M digits, and if the third data value and the fourth data value comprise an identical string of digits only for the first Q digits where Q < M, then the ordering of the third and fourth data values is determined by the ordering of the (Q+1)^{st} digit from the third data value and the (Q+1)^{st} digit from the fourth data value.

46. The method of claim 45, wherein the second portion precedes the first portion in the data structure.

47. The method of claim 45, wherein the data strings comprise telephone numbers.

48. The method of claim 45, wherein the data strings comprise postal routing codes.

49. A method for high performance data processing, said method comprising creating a plurality of data structures, wherein each of said data structures includes at least a first portion and a second portion, said first portion storing a data string, said second portion storing a length value associated with the data string wherein, each data structure has a predetermined fixed width, and wherein the data string in each data structure represents a digit string of length zero or more, up to a predetermined maximum length, wherein said maximum length corresponds to a number of sub-fields provided in the first portion of the data structure.

50. The method of claim 49, wherein each of said data structures comprises an unsigned integer used in manipulation and comparison operations in a computing process.

51. The method of claim 49, wherein the data strings comprise telephone numbers.

52. The method of claim 49, wherein the data strings comprise postal routing codes.

53. The method of claim 49, wherein each of said data structures comprises a multi-word unsigned integer used in manipulation and comparison operations in a computing process.

54. The method of claim 49, wherein the length value follows the digit string the data structure so that it is considered less significant in a comparison operation, yielding a sorting order for a first digit string having a first length value and a second digit sting having a second length value wherein:
(a) if the first digit string is identical to second digit string, for the first n digits of the first and the second digit strings, where n is the minimum of the first and the second length values, then the digit string having shorter length value precedes the data string having the longer length value, otherwise
(b) if the first and second digit strings differ anywhere in the first n digits of the first and the second data strings, then the sorting order of the first and second strings is determined by an ordering of a leftmost non-matching correspondingly positioned digit in the first and second data strings.

55. The method of claim 49, wherein the length value precedes the data value so that it is considered more significant in a comparison operation, yielding a sorting order for a first digit string having a first length value and a second digit sting having a second length value
wherein:
(a) if the first length value is not equal to the second length value, then the digit string having shorter length string precedes the digit string having the longer length, otherwise
(b) if the first length value is equal to the second length value and if the first digit string is not equal to the second digit string, then the ordering of the first and second digit strings is determined by an ordering of a leftmost non-matching, correspondingly positioned, digit in the first and second digit strings.

56. The method of claim 49, wherein the plurality of data structures are organized into a plurality of rows in a data table, wherein each row comprises a set of data structures and a start range value identifying a first member of the set of data structures comprising each of said rows.

57. The method of claim 56, wherein each start range value is stored in a data structure in a row.

58. The method of claim 57, wherein the length value follows the digit string the data structure so that it is considered less significant in a comparison operation, yielding a sorting order for a first digit string having a first length value and a second digit sting having a second length value wherein:
(a) if the first digit string is identical to second digit string, for the first n digits of the first and the second digit strings, where n is the minimum of the first and the second length values, then the digit string having shorter length value precedes the data string having the longer length value; otherwise
(b) if the first and second digit strings differ anywhere in the first n digits of the first and the second data strings, then the sorting order of the first and second strings is determined by an ordering of a leftmost non-matching correspondingly positioned digit in the first and second data strings.

59. The method of claim 49, wherein an ambiguous digit string is detected using a special comparison operation with a candidate matching row or a row following the candidate matching row.

60. The method of claim 49, further comprising an end range value identifying a last member of the set of data structures comprising each of said rows.

61. The method of claim 60, wherein each end range value stored in a data structure in a row.

62. The method of claim 61 wherein the length value follows the digit string the data structure so that it is considered less significant in a comparison operation, yielding a sorting order for a first digit string having a first length value and a second digit sting having a second length value wherein:
(a) if the first digit string is identical to second digit string, for the first n digits of the first and the second digit strings, where n is the minimum of the first and the second length values, then the digit string having shorter length value precedes the data string having the longer length value; otherwise
(b) if the first and second digit strings differ anywhere in the first n digits of the first and the second data strings, then the sorting order of the first and second strings is determined by an ordering of a leftmost non-matching correspondingly positioned digit in the first and second data strings.

63. The method of claim 60, wherein an ambiguous digit string is detected using a special comparison operation with a candidate matching row or a row following the candidate matching row.

64. The method of claim 49, wherein the plurality of data structures are organized into a plurality of rows in a data table, wherein each row comprises a set of data structures and an end range value identifying a last member of the set of data structures comprising each of said rows.

65. The method of claim 64, wherein each end range value is stored in a data structure in a row.

66. The method of claim 65, wherein the length value follows the digit string the data structure so that it is considered less significant in a comparison operation, yielding a sorting order for a first digit string having a first length value and a second digit sting having a second length value wherein:
(a) if the first digit string is identical to second digit string, for the first n digits of the first and the second digit strings, where n is the minimum of the first and the second length values, then the digit string having shorter length value precedes the data string having the longer length value, otherwise
(b) if the first and second digit strings differ anywhere in the first n digits of the first and the second data strings, then the sorting order of the first and second strings is determined by an ordering of a leftmost non-matching correspondingly positioned digit in the first and second data strings.

67. The high-performance data engine of claim 28, wherein an ambiguous digit string is detected using a special comparison operation with a candidate matching row or a row following the candidate matching row.

68. The method of claim 49, wherein the plurality of data structures are organized into a plurality of rows in a data table, wherein each row comprises a set of data structures and a start range value identifying a first member of the set of data structures comprising each of said rows and an end range value identifying a last member of the set of data structures comprising each of said rows.

69. The method of claim 68, wherein each start range value and each end range value is stored in a data structure in a row.

70. The method of claim 69, wherein the length value follows the digit string the data structure so that it is considered less significant in a comparison operation, yielding a sorting order for a first digit string having a first length value and a second digit sting having a second length value wherein:
(a) if the first digit string is identical to second digit string, for the first n digits of the first and the second digit strings, where n is the minimum of the first and the second length values, then the digit string having shorter length value precedes the data string having the longer length value; otherwise
(b) if the first and second digit strings differ anywhere in the first n digits of the first and the second data strings, then the sorting order of the first and second strings is determined by an ordering of a leftmost non-matching correspondingly positioned digit in the first and second data strings.

71. The method of claim 68, wherein an ambiguous digit string is detected using a special comparison operation with a candidate matching row or a row following the candidate matching row.

72. The method of claim 68, wherein the data strings comprise telephone numbers.

73. The method of claim 68, wherein the data strings comprise postal routing codes.
